# EUROPEAN PATENT SPECIFICATION

(11) **EP 4 168 870 B1**
(45) Date of publication and mention of the grant of the patent: **12.03.2025**
(21) Application number: 21745414.9
(22) Date of filing: 23.06.2021
(51) Int. Cl.: G05B 23/02

(54) **METHOD FOR THE PREDICTIVE MAINTENANCE OF AN AUTOMATIC MACHINE FOR MANUFACTURING OR PACKING CONSUMER ARTICLES**
VERFAHREN ZUR VORAUSSCHAUENDEN WARTUNG EINER AUTOMATISCHEN MASCHINE ZUR HERSTELLUNG ODER VERPACKUNG VON KONSUMARTIKELN
PROCÉDÉ DE MAINTENANCE PRÉDICTIVE D'UNE MACHINE AUTOMATIQUE PERMETTANT DE FABRIQUER OU DE CONDITIONNER DES ARTICLES DE CONSOMMATION

(30) Priority: 23.06.2020 IT 202000014944
(43) Date of publication of application: 26.04.2023
(73) Proprietor: G.D SOCIETA' PER AZIONI, 40133 Bologna (IT)
(72) Inventor: DEGLI ESPOSTI, Matteo, 40133 Bologna (IT); ZANOTTI, Maurizio, 40133 Bologna (IT); GAMBERINI, Giuliano, 40133 Bologna (IT)
(74) Representative: Studio Torta S.p.A.
(86) International application number: PCT/IB2021/055567
(87) International publication number: WO 2021/260595

(56) References cited:
- EP-A1- 3 252 682
- EP-A1- 3 557 354
- EP-A1- 3 644 038
- EP-B1- 1 836 576
- WO-A1-2019/186453
- CN-A- 110 696 049
- JP-A- 2019 024 305
- US-A1- 2005 209 767
- US-A1- 2007 088 550
- VEGARD FLOVIK: "How to use machine learning for anomaly detection and condition monitoring | by Vegard Flovik | Towards Data Science", 31 December 2018 (2018-12-31), pages 1 - 14, XP055783047, Retrieved from the Internet <URL:https://towardsdatascience.com/how-to-use-machine-learning-for-anomaly-detection-and-condition-monitoring-6742f82900d7> [retrieved on 20210308]

## Description

### CROSS-REFERENCE TO RELATED APPLICATIONS

This patent application claims priority from Italian patent application no. 102020000014944 filed on 23/06/2020.

### TECHNICAL FIELD

The present invention relates to a method for the predictive maintenance of an automatic machine for manufacturing or packing consumer articles.

The present invention finds an advantageous, but not exclusive, application in the predictive maintenance of an automatic packaging machine that manufactures packets of cigarettes, to which the following disclosure will explicitly refer without losing generality.

### PRIOR ART

In manufacturing plants for the processing of consumer articles, the introduction of various systems for the predictive maintenance has recently been proposed, i.e., systems that are able to determine some time in advance when it will be necessary to carry out a maintenance intervention (for example adjusting, cleaning or replacing a component) in an automatic machine.

By predicting some time in advance when it will be necessary to carry out maintenance interventions, it is possible to program the maintenance interventions in a coordinated and rational manner; in this way, maintenance interventions, machine downtimes, and the number of discarded products are optimized, i.e., reduced to a minimum.

Generally, these predictions are made with systems that are particularly expensive in terms of time and design. In particular, during the construction of the automatic machine, special sensors are generally installed on the machine parts which empirically or, following advanced simulations, are those most at risk.

In some cases, especially to detect the wear of a component, these sensors are embedded inside the component and generate a warning or an alarm as soon as wear is made visible. In other cases, accelerometers, video-cameras and/or thermometers are installed near the components to be monitored so as to detect any excessive variations in the single analysed feature.

However, said variations of local variables may depend on a multiplicity of factors not always detectable by means of an appropriate sensor. For example, the faster consumption of a blade may be due to the presence of dirt in the cutting area, the loosening of a screw, vibrations, overheating of a nearby area, variation of the inclination of the cut or entry of the material, etc., or by the combination of some of these features.

With traditional systems, concentrated solely in detecting a local one-dimensional feature and in defining, based on the latter, the current state of a component with respect to a reference value (generally scalar), it is possible that the increasing risk of malfunction of a component is overlooked due to the combination of more than one factor. According to some of these systems, the oscillations of predefined signals are compared with what is detected by the appropriate sensors, establishing one-dimensional threshold values (at one or two ends), exceeding which, a warning of necessary maintenance is generated.

Some known systems are usually unable to perform high frequency sampling due to the huge amount of data to be managed and transmitted in real time. In other known systems an attempt has been made to solve this problem by locally averaging the values detected at high frequency and transmitting only the average to a central data processing unit, drastically reducing the amount of data to be managed, but also the accuracy of the data, as the single values are not considered by the central processing unit and therefore any peaks of values that could suggest the approach of a malfunction cannot be considered.

Furthermore, it often happens that, by comparing the oscillations of a predefined reference signal with those of the current signal detected by the respective sensor, it is not possible to efficiently carry out maintenance predictions as the current signal could have oscillations indicating a malfunction but not exceed the upper or lower threshold values that are set starting from the reference signal.

The presence of all the sensors necessary to carry out an effective and efficient predictive maintenance determines an enormous increase in the manufacturing costs of an automatic machine; moreover, generally the use of said sensors does not allow to predict some of the malfunctions caused synergistically by several factors.

The patent US 5852351 describes a local unit for acquiring data from the sensors of a machine for carrying out predictive maintenance on the machine itself. The local acquisition unit is mounted on-board the machine to detect the signals coming from the sensors and to periodically store the value of said signals in a memory. At predetermined times, an operator equipped with a transportable electronic device (for example a portable computer) comes close to the machine to transfer (preferably by means of an infrared transmission) the content of the memory of the local acquisition unit to a memory of the transportable electronic device. The acquisition method described in the patent US 5852351 is simple and inexpensive to implement, but on the other hand has high management costs since it constantly requires the intervention of an operator who reads the data stored in the memory of the local acquisition unit; moreover, if the reading of the data stored in the memory of the local acquisition unit is not carried out with a high temporal frequency, the predictive maintenance system cannot predict with a good margin in advance when it will be necessary to carry out maintenance interventions.

The patent application US 2003046382 describes a method for the remote diagnosis of an automatic machine, according to which a local acquisition and control unit is coupled to the automatic machine which is connected to a series of sensors arranged on-board the automatic machine. Periodically the local acquisition and control unit reads the signals supplied by the sensors and compares these signals with a model of the automatic machine stored in the local acquisition and control unit; if the local acquisition and control unit detects a significant anomaly between the signals supplied by the sensors and the model of the automatic machine, then the local acquisition and control unit transmits the information relating to the anomaly to a remote diagnosis system which formulates a diagnosis of the anomaly and then sends a request for technical intervention to a service centre which can carry out maintenance operations on the automatic machine. According to a preferred embodiment described in the patent application US 2003046382, the remote diagnosis system comprises a first remote diagnosis station (computer or computer network) to formulate a first diagnosis, a further second remote diagnosis station (computer or computer network) to formulate a second diagnosis if the first remote diagnosis station was not able to formulate a diagnosis, and a team of technicians to formulate a third diagnosis if not even the second remote diagnosis station was able to formulate a diagnosis.

Patent document US 2007088550 A1 discloses a method for predictive maintenance of a machine includes collecting feature data for the machine which includes a plurality of feature vectors.

### DESCRIPTION OF THE INVENTION

The purpose of the present invention is to provide a method for the predictive maintenance of an automatic machine for manufacturing or packing consumer articles that is at least partially free from the drawbacks described above and, at the same time, is simple and inexpensive to implement.

According to the present invention, a method is provided for the predictive maintenance of an automatic machine for manufacturing or packing consumer articles, according to what is claimed in the attached claims. An automatic machine for manufacturing or packing consumer articles is also provided configured to carry out the aforementioned method.

The claims describe preferred embodiments of the present invention forming an integral part of the present description.

### BRIEF DESCRIPTION OF THE DRAWINGS

The present invention will now be described with reference to the attached drawings, which illustrate some non-limiting embodiments thereof, wherein:
- Figure 1 is a perspective and schematic view of an automatic machine for manufacturing articles of the tobacco industry;
- Figure 2 illustrates an anomaly matrix having as dimensions two statistical features as a function of a motorization metric;
- Figure 3 illustrates a possible diagram relating to the general steps of the method and how they can be connected to one another;
- Figure 4 is a graph that illustrates a comparison between a correct metric and one that determines a warning of necessary subsequent maintenance; and
- Figure 5 is a graph that illustrates a comparison between a series of statistical features in a satisfactory configuration and the same series of statistical features in an unsatisfactory configuration which results in a subsequent maintenance warning.

### PREFERRED EMBODIMENTS OF THE INVENTION

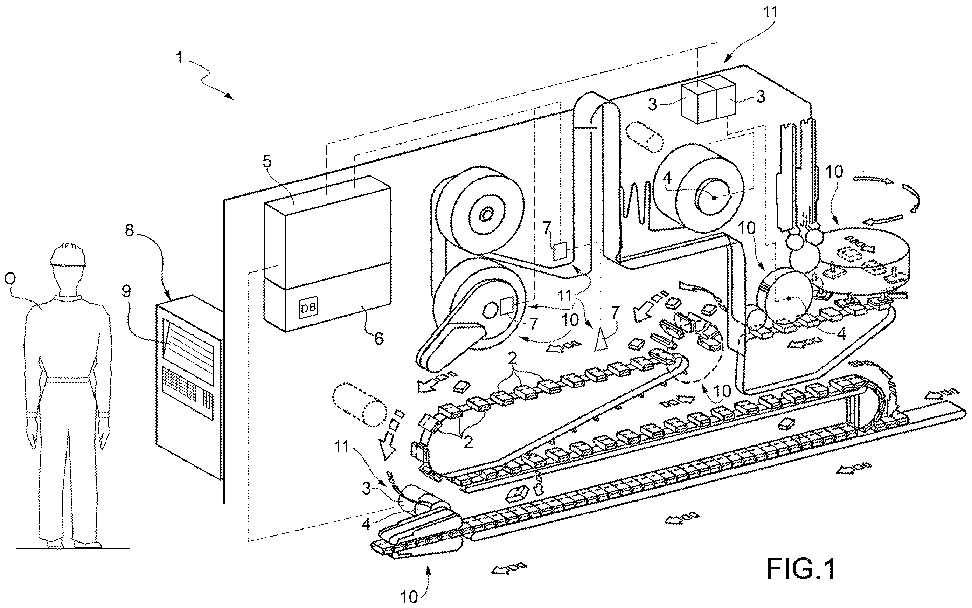

Figure 1 illustrates an automatic machine 1 for manufacturing articles of the tobacco industry, in particular an automatic packaging machine 1 for applying a transparent overwrap to packets of cigarettes.

The automatic machine 1 comprises various elements designed to carry out processing on the articles (packets 2 of cigarettes in the embodiment illustrated in Figure 1). In particular, the automatic machine 1 comprises one or more electric drives 3 configured to control at least one electric actuator **4.**

According to some preferred but non-limiting embodiments, the electric actuators 4 comprise electric motors (in particular of the brushless type). According to other embodiments not illustrated, the actuators 4 also comprise types of drives other than the electric motors (for example electrically actuated cylinders, etc.).

In some non-limiting cases, the electric drives 3 are grouped in a dedicated area of the automatic machine 1 (for example a general or dedicated electrical panel). Alternatively, or in addition, some electric drives 3 are arranged at the respective electric actuator 4. For example, in the case of an electric motor, the respective drive can also be arranged on-board the stator of the motor itself. In other words, in some non-limiting cases, the electric drives 3 are arranged on-board a machine control cabinet (which may or may not be the same in which the data processing unit 5 is also located). Alternatively, or in addition, some electric drives 3 can be arranged on-board the respective electric actuator 4 to which they are connected.

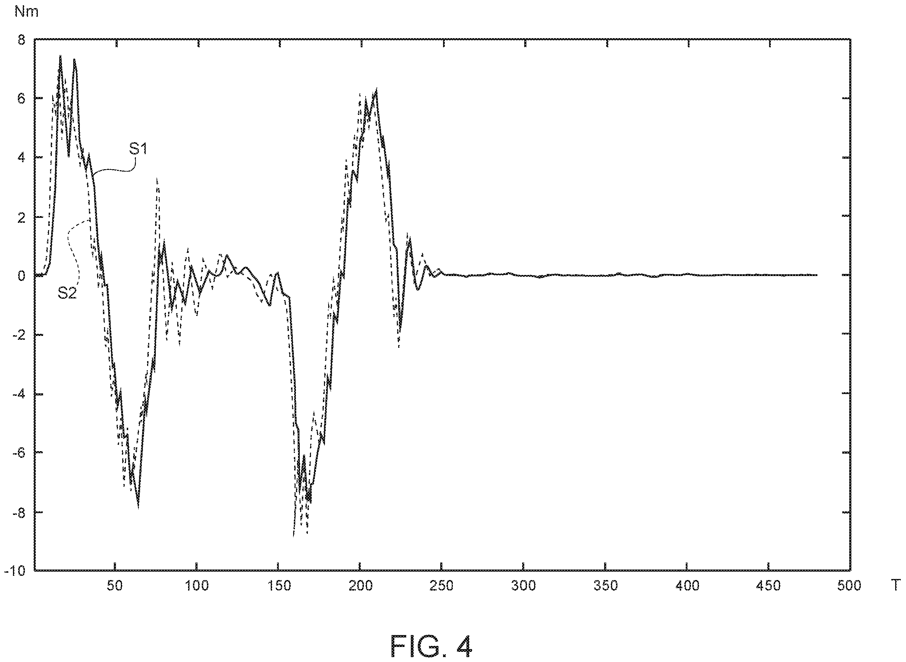

In particular, the electric drives 3 are also configured to detect and record (for example in local memory units inside each electric drive 3) periodically at a sampling frequency SF, a sampling series SS (for example each point of the graph illustrated in Figure 4) relating to at least one motorization metric MM of the at least one electric actuator 4. In some non-limiting cases, the motorization metric MM comprises (is) the velocity error of an electric actuator 4. In other non-limiting cases, such as that shown in Figure 4, the motorization metric MM comprises (is) the torque (or current required) error of an electric actuator. In further non-limiting cases not illustrated, the motorization metric MM comprises (is) any difference between a reference value and an actual value relating to an electric actuator 4 and detected by the respective electric drive 3. Obviously, the same electric drive 3 can detect and record different metrics relating to the same electric actuator 4 and/or different electric drives 3 can record mutually different metrics relating to different electric actuators 4.

The automatic machine 1 comprises, furthermore, a data processing unit 5 (in particular a processor or a dedicated industrial PC), which is configured to periodically receive, at a transmission frequency TF equal to or lower than the sampling frequency SF, the sampling series SS previously detected at the sampling frequency SF.

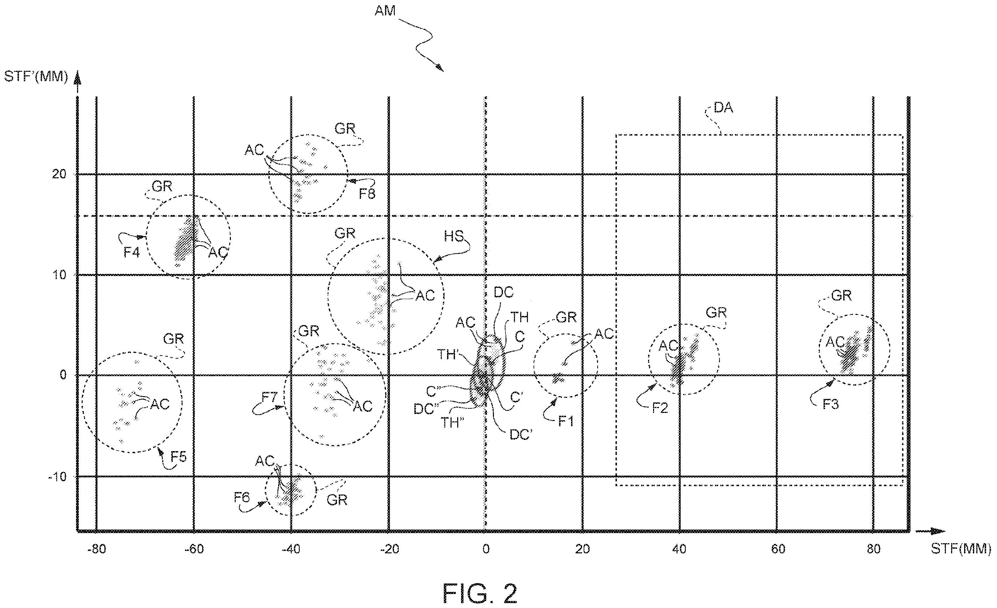

Furthermore, as illustrated in the non-limiting embodiment of Figure 1, the automatic machine 1 comprises a local storage unit 6, configured to contain (i.e., to have stored inside the same for reading and/or writing) an anomaly matrix AM (such as, for example, the one illustrated in Figure 2). In particular, the anomaly matrix AM has, as dimensions, at least two statistical features STF based on the detected motorization metric MM. More precisely, the storage unit 6 comprises an area dedicated to a database DB used by the data processing unit 5 for processing and updating a model of the automatic machine 1.

With the term "statistical features STF" we mean all the functions (functionalities) applicable to a set of data, which can be defined and calculated via statistical analysis, in particular any scalar value that can be defined by performing statistical operations on the sampling series SS related to the (at least) motorization metric MM. Examples of statistical features can be: the mean, the median, the mode, the shape factor and the shape indices (kurtosis and skewness). Examples of signal metrics can be: the Clearance (or Clearing) Factor, the Crest Factor, the Impulse Factor, the Peak Value, the root mean square or RMS value, the signal-to-noise and distortion ratio SINAD, the signal-to-noise ratio SNR, the standard deviation STD, the total harmonic distortion THD.

Advantageously but not necessarily, the automatic machine 1 comprises at least one local acquisition unit 7, which is connected to (or determines) a node of a bidirectional, digital and local industrial network (for example of the I/O Link^{®} type) . In the non-limiting embodiment of Figure 1, in order to allow high velocity and quality data transmission, the industrial network is a local wired network (i.e., with cable connections) on-board the automatic machine 1.

In the non-limiting embodiment of Figure 1 a plurality of local acquisition units 7 are provided, having different features. In particular, the acquisition units 7 can be any type of sensor configured to detect a value, preferably analogue, of a local state metric LSM such as temperature, vibration, etc. The local acquisition units 7 are also configured to transmit the local state metric LSM detected to the data processing unit 5.

Advantageously but not necessarily, the local acquisition units 7 are each arranged on-board a different mechanical group 10 mounted on the automatic machine 1. In this way, it is possible to monitor the status of each mechanical group and possibly stop the manufacturing of only one part of the machine relating to the group 10 to be maintained.

In detail, at least one local acquisition unit 7 comprises a smart tag and/or an IoT *(internet of things*) sensor. In this way, it is possible to inform the data processing unit 5 of the conditions of single mechanical groups 10 (including mobile ones, for example a set of units moving on a direct drive system) identified via the information transmitted by the respective smart tag or by the IoT sensor mounted on-board a group 10 or of a single component of the automatic machine 1.

Advantageously but not necessarily, the automatic machine 1 comprises, furthermore, a communication interface 8 (Figure 1) configured to be connected to the data processing unit 5 and to allow the same to transmit a maintenance program 9 to a maintenance resource, for example an operator O as illustrated in Figure 1 (or a maintenance robot). In the non-limiting embodiment of Figure 1, the communication interface 8 is a (tactile) screen configured to alert the operator O regarding the upcoming maintenance operations to be addressed. Following the transmission of the maintenance program 9 to the respective maintenance resource, the resource (or operator O in the case of Figure 1) carries out maintenance operations with an order and time-phase indicated in the maintenance program 9.

According to a further aspect of the present invention, a method is provided for the predictive maintenance of an automatic machine 1 for manufacturing or packing consumer articles.

The method comprises the step of detecting and recording, periodically and at a sampling frequency SF, (at least) a sampling series SS relating to a motorization metric MM of at least one electric actuator 4, by means of a respective local control unit 11. In particular, the local control unit 11 comprises at least one electric drive 3 configured to drive at least one electric motor of the automatic machine 1 or a local acquisition unit 7 configured to periodically acquire a sampling series SS (i.e., values) of a local state metric LSM and periodically transfer them to the data processing unit 5.

Advantageously, the method also comprises the step of transmitting, periodically and at a transmission frequency TF equal to or lower (preferably lower) than the sampling frequency SF, the sampling series SS recorded at the data processing unit 5. In detail, the sampling frequency SF is a particularly high frequency compared to the transmission frequency TS since the accuracy of the detection also depends on the sampling velocity, defined precisely by the frequency SF. On the other hand, the transmission frequency TF determines the velocity with which the data processing unit 5 can update the database DB and therefore the model of the automatic machine 1.

Advantageously but not necessarily, the sampling frequency SF is greater than or equal to 2 kHz (i.e., the corresponding sampling time is lower than or equal to 500 microseconds), equal to or greater than 4 kHz (i.e., with a sampling time lower than or equal to 250 microseconds). In this way, it is possible to carry out intensive sampling, greatly reducing the risk of losing some information that could indicate a future anomaly and therefore the need for maintenance.

In particular, the sampling frequency SF corresponds to the so-called cycle-time of the control unit 11, i.e., the refresh time of a sensor in the case of a local acquisition unit or the closing time of the velocity loop by means of an electric drive 3.

Advantageously but not necessarily, the transmission frequency TF is lower than or equal to 0.2 Hz (i.e., the time between one transmission of a sampling series SS and the next is greater than or equal to 5 seconds), in particular lower than or equal to 0.1 Hz (i.e., the time between one transmission of a sampling series SS and the next is greater than or equal to 10 sec), more in particular, lower than or equal to 0.067 Hz (i.e., with a transmission time greater than or equal to 15 sec). In this way it is possible to avoid continuously transmitting all the data detected to the control unit 5 in real time and therefore reduce the continuous traffic of information as the same data (the sampling series SS) are transmitted in groups.

Advantageously but not necessarily, during the recording of the motorization metrics MM and/or the local state metrics LSM, the plurality of control units 11 (i.e., the electric drives 3 and the local acquisition units 7) receives, at a synchronization frequency SCF, from the data processing unit 5 a synchronism signal MS to be included in the recording of the sampling series SS. In particular, the synchronism signal MS is included for every "n" recorded sampling series SS. More precisely, the synchronization frequency SCF is lower than the sampling frequency SF, but higher than the transmission frequency TF.

In particular, the synchronization frequency SCF corresponds to the so-called cycle-time of the data processing unit 5. In detail, the data processing unit 5 is a PLC or an industrial PC, and the synchronization frequency SCF is greater than or equal to 200 Hz, in particular greater than or equal to 500 Hz, more in particular greater than or equal to 1 kHz (kilohertz).

Advantageously but not necessarily, the synchronism signal MS is an analogue signal (i.e., not digital, having the possibility of assuming a plurality of different values). In this way, it is possible to synchronize each sampling series SS even after transmission (in groups of data, given the transmission frequency TF considerably lower than the sampling frequency SF). In other words, knowing the numerical (analogue) value of the synchronism signal MS and the instant in which transmission occurs, it is possible to rephase the sampling series SS over time, despite the fact that they are transmitted in blocks (groups).

According to some non-limiting embodiments, the synchronism signal MS (for example from the PLC - unit 5 - to the drive 3) is the position of a physical or virtual master axis of the automatic machine 1. In particular, the instant-by-instant value of the so-called sawtooth of the (virtual) master axis of the automatic machine 1 is considered as the synchronism signal MS. In this way, the position of the master axis acts as a reference for the rephasing over time of the sampling series SS transmitted from the control unit 11 to the data processing unit 5. Thanks to the rephasing by means of the synchronism signal MS, the amount of data to be transmitted is enormously reduced, whereas, instead of transmitting the data and the respective recording instant (as occurs in systems of the known art) only the values of the samples SS and, for all "n" samples, the value of the master axis position for the next synchronization of the transmitted sample series SS.

In other non-limiting cases, the synchronism signal MS is a suitable counter (increasing or decreasing), which is used as a master reference according to what has been previously described.

Advantageously but not necessarily, the method comprises the further step of synchronizing the samples SS transmitted to the data processing unit 5 using the synchronism signal MS as a reference to understand which sample SS corresponds to a given instant in time or to a given phasing of the automatic machine 1. In particular, the data processing unit 5 pre-processes each series of transmitted sampling series SS by synchronizing them over time.

In particular, the method also comprises the further step of defining (at least) a multidimensional tolerance horizon TH (in particular by training a model by means of an unsupervised classifier, as explained in the following) within the anomaly matrix AM (Figure 2) having as dimensions at least two statistical features STF (for example chosen from the group formed by those previously described) based on the at least one sampling series SS detected and related at least to the motorization metric MM (and/or to the local state metric LSM) detected. In other words, the statistical features STF that define the dimensions of the anomaly matrix AM are calculated as a function of the detected motorization metric MM.

Advantageously but not necessarily, in particular in addition to the motorization metric MM, the series of recorded samples SS also relates to a local state metric LSM, concerning the condition of one or more mechanical groups 10 (including at least one element) mounted on-board the automatic machine, in particular the values of the local state metric are detected by means of at least one local acquisition unit 7, connected to a node of a bidirectional, digital and local, point-to-point, and wired (or wireless) industrial network).

In particular, the local state metric LSM comprises vibrations, more precisely detected in multiple dimensions, and/or temperatures and/or accelerations.

In the non-limiting embodiment of Figure 2, the anomaly matrix AM comprises two dimensions defined by two respective statistical features STF and STF' calculated relative to the motorization metric MM (the same could be done with a local state metric LSM); in particular, the abscissa indicates the statistical feature STF (function of the motorization metric MM) known as kurtosis, while the ordinate indicates the statistical feature STF' (also a function of the same motorization metric MM). In this non-limiting case, the motorization metric MM is the torque error.

According to some preferred but non-limiting embodiments, the motorization metric MM is the velocity error of an electric motor (for example brushless) and in particular detected by the respective drive. In detail, surprisingly, by using this motorization metric MM it is possible to more easily detect anomalies in the behaviour of electric motors. In particular, it was found that the use of the velocity error as a motorization metric MM allows to highlight the behaviours caused by friction.

In the specific case, the friction changes in a kinematic motion allow an improved evaluation of the wear of the components of the automatic machine 1, improving the estimates for the predictive maintenance.

Advantageously, the method comprises the further step of calculating, for each sampling series SS detected, the at least two statistical features STF (to define at least one multidimensional matrix) in order to define the position of an actual condition AC within the anomaly matrix AM.

In some non-limiting cases, the condition AC corresponds to a single sample SS. In particular, a cloud of consecutive actual conditions AC is defined for a sampling series SS.

In other non-limiting cases, the position of the actual condition AC is calculated as a function of a plurality of samples SS. In further non-limiting cases, the position of the actual condition AC within the anomaly matrix AM is determined as a function of an entire sampling series SS detected between one transmission and the other between a local control unit 11 and the data processing unit 5.

Advantageously but not necessarily, and as illustrated in the non-limiting embodiment of Figure 2, the multidimensional tolerance horizon TH, TH', TH" is defined via an unsupervised classifier, in particular a K-means algorithm.

In the non-limiting embodiment of Figure 2, the unsupervised classifier used to calculate (define) the tolerance horizon TH, TH', TH'' is the so-called K-means algorithm for the partition analysis of groups. In particular, using this algorithm, a centre C, C', C" of the group (i.e., of the sampling series SS received by the data processing unit) is first calculated and subsequently, based on the distribution of the actual conditions AC (i.e., of samples SS) the horizon TH, TH', TH" is determined.

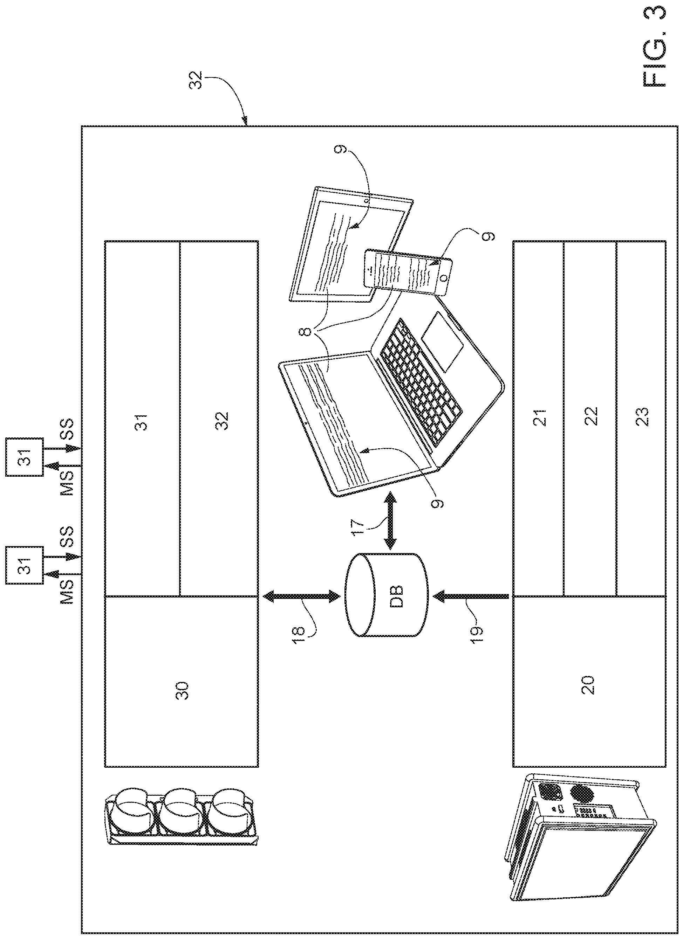

In detail, in the central portion of Figure 2, 3 repetitions of the method described above are illustrated relating to correct operating conditions determined as a function of three different (successive) sampling series SS.

Furthermore, the method comprises a step of determining, as a function of the position of the actual condition AC (Figure 2) in the anomaly matrix AM and of the multidimensional tolerance horizon TH, the imminence of necessary maintenance, in particular by verifying the presence of hazardous conditions DC near or beyond the tolerance horizon TH.

According to the non-limiting embodiment of Figure 2, the tolerance horizon TH, TH', TH'' is configured to have a non-linear shape, in particular elliptical or circular.

In some non-limiting cases not illustrated, the tolerance horizon TH has different (complex) shapes based on the type of anomaly to be detected.

According to some non-limiting embodiments not illustrated, the metric MM, LSM used for the calculation of the statistical features STF, STF' varies according to the anomaly to be detected.

Advantageously but not necessarily, the tolerance horizon TH is periodically updated (see the presence of the horizons TH' and TH'' in Figure 2) including the values of the most recent sampling series SS detected.

In some non-limiting cases, the tolerance horizon TH is updated based only on the values of the most recent sampling series SS detected.

In other non-limiting cases, the tolerance horizon TH is updated based on both the values of the most recent sampling series SS detected and the values of some (or all) of the previous sampling series SS detected.

According to some preferred non-limiting embodiments, the method comprises the further step of training a model of the automatic machine by means of an unsupervised classifier, in particular a K-means algorithm, using as input a plurality of statistical features STF, STF' (for example some of the statistical features listed above) resulting from known malfunctions.

According to some non-limiting cases, the anomaly matrix MA comprises a plurality of groups GR, each of which corresponds to the state of a different mechanical element of the automatic machine 1 or of mechanical elements (or groups 10) with similar structural features.

In the non-limiting embodiment of Figure 2, groups GR are illustrated processed during possible known anomalous conditions and simulated or empirically tested, to understand how the statistical features STF, STF' (or some of the previously listed statistical features) determine a deviation on the anomaly matrix AM of the actual conditions AC. In particular, the anomalies F1, F2 and F3 were determined by varying (increasing/decreasing) the frictions in play in a particular mechanical group 10 and by calculating the statistical features STF, STF' based on the torque error (metric MM) detected by the respective drive. The anomaly F4, on the other hand, was generated by simulating an increase in clearance in the same mechanical group 10. In these first four anomalies the variation in terms of the feature STF (in this case the kurtosis) is evident. Furthermore, the anomalies F5 and F6 were generated by simulating known torque disturbances from the outside on the aforementioned mechanical group 10. In addition, the anomalies F7 and F8 indicate a weighting of group 10 with different masses. Finally, the cloud HS of actual conditions AC indicates a simulation of correct operation neglecting (from a virtual laboratory) the surrounding conditions such as humidity, temperature, some friction, etc. These conditions and all other known potential anomalies can be used to refine the model of the automatic machine 1 and define a plurality of anomaly matrices AM as a function of different statistical features STF (for example some of the previously listed statistical features) defined so as to efficiently detect the different types of possible anomalies.

According to other non-limiting cases, or in addition, for each mechanical element, or for each group, a specific anomaly matrix AM is defined having the statistical features STF as dimensions that best detect a deviation from the desired values for the specific element or group 10.

Advantageously but not necessarily, the model of the automatic machine 1 is periodically updated to comprise the most recent sampling series SS detected. In particular, the model is also updated in the event of an unexpected anomaly (or an unexpected malfunction), defining a malfunction area DA on the anomaly matrix AM (Figure 2).

Advantageously but not necessarily, the method comprises the further step of calculating the velocity with which successive actual conditions AC move within the anomaly matrix AM, in particular the velocity with which the most recent actual condition moves towards the tolerance horizon TH. The higher said velocity, the quicker preventative maintenance will need to be done.

Advantageously but not necessarily, the method comprises the further step of periodically scheduling a maintenance program 9 based on the position or velocity of the most recent actual condition AC within the anomaly map AM. In particular, the maintenance program 9 is transmitted to the maintenance resource (operator O) via the communication interface 8 (which, in addition to an HMI, can be a mobile device such as a PC, a tablet or a smartphone).

According to some preferred non-limiting embodiments, the method further comprises a step of periodically transmitting (and updating at a frequency equal to or lower than the transmission frequency) the maintenance program 9 updated to a maintenance resource, for example, to the operator O illustrated in Figure 1, which carries out the preventive maintenance operations in the order established in the (periodic) schedule detailed by the maintenance program 9.

Advantageously but not necessarily, the motorization metric MM comprises torque/current supplied by a motor and/or motor following error and/or load percentage and/or RMS, and/or torque error. All these motorization metrics MM are in particular detected by means of an oscilloscope inside the electric drive 3.

Advantageously but not necessarily, the method described up to now can be applied locally to the automatic machine 1, i.e., without the need to use distributed data sharing systems (cloud) and/or without the necessary internet connection.

In the non-limiting embodiment of Figure 3, possible connections between some general steps of the method are illustrated. In particular, in this non-limiting embodiment, one or more electrical drives 3 and/or one or more local acquisition units communicate bidirectionally with the data processing unit 5 as they send the series of recorded and detected sampling series SS and they periodically receive (at the synchronization frequency) the synchronism signal MS. Within the data processing unit 5 two separate sub-steps 20 and 30 are provided. In step 20, the data processing unit 5 deals with the conveyance of data to the database DB. In particular, in block 21 the received samples SS are collected, in block 22 the received samples SS are pre-processed so as to synchronize them using the synchronism signal MS. Subsequently, in block 23 the statistical features STF necessary to evaluate the presence of any anomalies are extracted (processed/calculated). The extracted statistical features STF (i.e., the actual conditions AC within the anomaly matrix AM) are subsequently stored in the database DB (in particular in a unidirectional manner, as indicated by the arrow 19). In step 30, however, the data processing unit 5 deals with the detection of any anomalies. In block 31 the clouds of actual conditions AC (for example those illustrated in Figure 2) are classified (in particular by means of the K-means algorithm or any type of unsupervised classifier) by determining the tolerance horizon TH (following the centre C) and verifying the possible presence of dangerous conditions DC. In any case, following the classification of the information received, in block 32 a training of the database is carried out, including the information just classified in the model of the automatic machine 1. In this case the communication 18 is bidirectional since during the classification data are received from the database DB and during the training said data are transmitted to the same. The communication 17 between the database DB and the communication interface 8 is also bidirectional, since the maintenance resource, in addition to receiving the maintenance program 9, can communicate any maintenance carried out, allowing the data processing unit 5 to update said program 9.

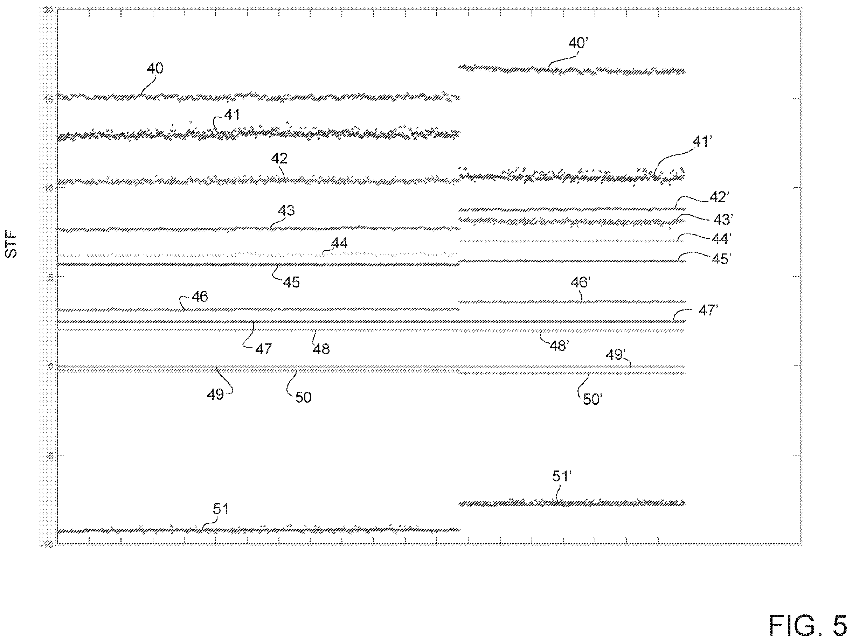

In the non-limiting embodiment of Figures 4 and 5, the comparison between a correct operating condition and an anomalous operating condition (which therefore determines a maintenance prediction) is illustrated. In particular, Figure 4 shows the value S1 over time of a torque error (eNm) of a correct operating condition, while the value S2 indicates the value over time of a torque error (eNm) of an anomalous operating condition. Using the method described above, it is possible to detect the anomaly as it determines a deviation of the conditions AC (i.e., the features STF, STF' calculated as a function of the samples SS) within the anomaly matrix AM. In solutions of the known art, this type of anomaly (which essentially follows the trend of the correct condition, with some slight inaccuracy and nervousness in the signal) would have been difficult to detect. In particular, Figure 5 illustrates the trend of a plurality of statistical features STF (for example of the type listed above) relating to a motorization metric MM, which, in the left part of the graph (i.e., the features from 40 to 51) indicate a correct operating condition, whereas in the right part of the graph (i.e., the features from 40' to 51') indicate an anomalous operating condition. Using the method described up to now, it is possible to train the model of the automatic machine 1 so that the data processing unit 5 can determine, by means of a multifactorial evaluation (the deviation of a single value does not necessarily cause an anomaly), if the actual conditions AC are in a correct zone or in an anomalous zone of the anomaly matrix AM.

Advantageously but not necessarily, the automatic machine 1 is configured to carry out the method described above.

In the preferred and non-limiting embodiment illustrated in Figure 1, the articles of the tobacco industry processed by the automatic machine 1 are packets 2 of cigarettes. According to different embodiments not illustrated, the automatic machine 1 is of a different type (for example a packaging machine, a cellophane wrapping machine, or a packing machine, a food machine, a machine for sanitary absorbent articles, etc.) and therefore the articles are cigarettes, filter pieces, tobacco packets, cigars, diapers, chocolates, etc.

Although the invention described above makes particular reference to a very precise embodiment, it is not to be considered limited to this embodiment, since all those variations, modifications or simplifications that would be evident to the person skilled in the art fall within its scope, such as for example: the addition of further actuators, the use on another type of machine of the tobacco industry other than a packaging machine, an anomaly other than those described (but which in any case could affect production, causing a so-called *"warning"),* the use of different data transmission systems or devices, algorithms other than those mentioned, statistical features other than those mentioned, etc.

The present invention has multiple advantages.

First of all, it allows to increase the efficiency of the automatic machines to which it is applied, as the predictivity of the malfunctions it determines allows to drastically reduce the number of unexpected and not optimized interruptions in terms of time (such as, for example, the breakage of a component without already having the relative spare part available). All this involves a significant reduction in production resumption times, with a consequent increase in the productivity of the automatic machine.

Furthermore, the reduction of these times obviously allows a proportional decrease in costs due to scheduled maintenance, which, unlike the cases in which a type of preventive maintenance is carried out (by estimating the average wear of a component and replacing the same even without apparent signs of failure), allows to replace a component only in case of real need, resulting in obvious savings in allowing not to have unnecessary spare parts in stock, or in any case to assess the real need.

In addition, the present invention allows, thanks to the synchronization signal and to the difference between the sampling frequency and the transmission frequency, to perform very high frequency sampling, effectively managing the amount of data, which does not necessarily have to be transmitted in real time to the data processing unit. In addition, the present invention allows to continuously improve the knowledge and adaptability of the automatic machine periodically recalculating the new tolerance horizons by updating the model of the machine.

A further advantage of the present invention lies in the fact of defining a multidimensional control, which allows to consider also those anomalies which, by monitoring the single values individually, it would not be possible to detect. Furthermore, the present invention also determines a reduction in costs due to the possibility of exploiting what has already been detected by components in any case present on-board the machine (such as for example the drives) obviating, at least partially, the need to add appropriate sensors otherwise necessary to carry out a predictive maintenance.

Finally, by continuously carrying out the method described above, it is possible to perform predictive maintenance of the automatic machine in order to reduce (or even cancel) the number of semi-finished articles to be discarded due to unfinished processing cycles usually due to sudden failures. The result is a further increase in productivity and a significant reduction in waste from an economic and environmental point of view.

## Claims

1. A method for the predictive maintenance of an automatic machine (1) for manufacturing or packing consumer articles; the method comprising the steps of:
- detecting and recording, periodically and at a sampling frequency (SF), at least sampling series (SS) related at least to one motorization metric (MM) of at least one electric actuator (4), by means of at least one respective local control unit (3, 11);
- transmitting, periodically and at a transmission frequency (TF), equal to or lower than the sampling frequency (SF), the recorded sampling series (SS) to a data processing unit (5);
- defining at least one multidimensional tolerance horizon (TH) within an anomaly matrix (AM) having, as dimensions, at least two statistical features (STF) based at least on the detected sampling series (SS);
- calculating, for each sampling series (SS) detected, the at least two statistical features (STF) in order to define the position of an actual condition (AC) within the anomaly matrix (AM);
- determining, based on the position of the actual condition (AC) in the anomaly matrix (AM) and of the multidimensional tolerance horizon (TH), the imminence of necessary maintenance; wherein the motorization metric (MM) is the velocity error of an electric motor, in particular detected by a respective drive.

2. The method according to claim 1, wherein, during the recording, each control unit (3, 11) receives, at a synchronization frequency (SFC), a synchronism signal to be included in the recording of the sampling series (SS); in particular, the synchronism signal is included in all "n" samples (SS); in particular, the synchronization frequency (SFC) is lower than the sampling frequency (SF), but higher than the transmission frequency (TF).

3. The method according to claim 2, wherein the synchronism signal is the position of a physical or virtual master axis of the automatic machine (1).

4. The method according to claim 2 or 3, and comprising the further step of synchronizing the samples (SS) transmitted to the data processing unit (5) using, as reference, the synchronism signal to understand which sample corresponds to a given instant in time or at a given time-phase of the automatic machine (1).

5. The method according to any one of the preceding claims, wherein the series of recorded samples (SS) also relates to a local state metric (LSM), concerning the condition of one or more devices mounted on the automatic machine (1), in particular the local state metric (LSM) values are detected by means of at least one local acquisition unit (7), connected to a node of a bidirectional, digital and local industrial network.

6. The method according to claim 5, wherein the local state metric (LSM) comprises vibrations, in particular detected in several dimensions, and/or temperatures and/or accelerations.

7. The method according to any one of the preceding claims, wherein the sampling frequency (SF) is greater than or equal to 2 kHz, in particular greater than or equal to 4 kHz.

8. The method according to any one of the preceding claims, wherein the transmission frequency (TF) is lower than or equal to 0.2 Hz, in particular lower than or equal to 0.1 Hz.

9. The method according to any of the preceding claims, wherein the multidimensional tolerance horizon (TH) is defined via an unsupervised classifier, in particular a K-means algorithm; the tolerance horizon (TH) being configured to have a non-linear shape, in particular elliptical or circular; in particular, the tolerance horizon (TH) is periodically updated including the values of the most recent sampling series (SS) detected.

10. The method according to any one of the preceding claims and comprising the further step of training a model of the automatic machine (1) by means of an unsupervised classifier, in particular a K-means algorithm, using as input a plurality of statistical features (STF) resulting from known malfunctions; in particular, the model is periodically updated including the most recent sampling series (SS) detected; in particular, the model is also updated in the event of an unexpected malfunction, defining an area (AC) of malfunction on the anomaly matrix (AM).

11. The method according to any one of the preceding claims, and comprising the further step of calculating the velocity with which successive actual conditions (AC) move within the anomaly matrix (AM), in particular the velocity with which the most recent actual condition (AC) moves towards the tolerance horizon (TH).

12. The method according to any one of the preceding claims, and comprising the further step of periodically scheduling a maintenance program (9) based on the position or velocity of the most recent actual condition (AC) within the anomaly matrix (AM).

13. The method according to claim 12 and comprising the further step of periodically transmitting the updated maintenance program (9) to a maintenance resource.

14. The method according to any one of the preceding claims, wherein the anomaly matrix (AM) comprises a plurality of groups, each of which corresponds to the state of a different mechanical element of the automatic machine (1) or of mechanical elements with similar structural features; in particular, a multidimensional tolerance horizon (TH) is defined for each group.

15. The method according to any one of the preceding claims, wherein the motorization metric (MM) comprises torque/current supplied by a motor and/or motor following error and/or load percentage and/or RMS values.

16. An automatic machine (1) for manufacturing or packing consumer articles; the automatic machine (1) comprising:
- one or more electric drives (3) configured to control at least one electric actuator (4) and to periodically detect and record, at a sampling frequency (SF), a sampling series (SS) relating to at least one motorization metric (MM) of the at least one electric actuator (4);
- a data processing unit (5), configured to periodically receive, at a transmission frequency (TF) equal to or lower than the sampling frequency (SF), the sampling series (SS) recorded at the sampling frequency (SF);
- a local storage unit (6), configured to contain an anomaly matrix (AM) having at least two statistical features (STF) based on at least one detected motorization metric (MM);
the automatic machine (1) being configured to carry out the method according to the preceding claims.

17. The automatic machine (1) according to claim 16 and comprising at least one local acquisition unit (7), connected to a node of a bidirectional, digital and local industrial network; in particular, the machine (1) also comprises a communication interface (8) configured to be connected to the data processing unit (5) and allowing the same to transmit a maintenance program (9) to a maintenance resource; in particular, the at least one local acquisition unit (7) comprises a smart tag and/or an IoT sensor; in particular, the electric drives (3) are arranged on-board a machine control cabinet or on the respective electric actuator (4) to which they are connected; in particular, the automatic machine (1) comprises a plurality of local acquisition units (7) each arranged on-board a different mechanical group mounted on the automatic machine (1).

## Patentansprüche

1. Verfahren für die prädiktive Wartung einer automatischen Maschine (1) für Herstellung oder Verpackung von Verbraucherartikeln; wobei das Verfahren die Schritte umfasst:
- Detektieren und Aufzeichnen, periodisch und mit einer Abtastfrequenz (SF), wenigstens von Abtastfolgen (SS), die in sich auf wenigstens eine Motorisierungsmetrik (MM) wenigstens eines elektrischen Aktuators (4) bezieht, mittels wenigstens einer jeweiligen lokalen Steuereinheit (3, 11);
- Übertragen, periodisch und mit einer Übertragungsfrequenz (TF) gleich oder kleiner als die Abtastfrequenz (SF), der aufgezeichneten Abtastfolgen (SS) an eine Datenverarbeitungseinheit (5);
- Definieren wenigstens eines mehrdimensionalen Toleranzhorizonts (TH) innerhalb einer Anomaliematrix (AM), die, als Dimensionen, wenigstens zwei statistische Merkmale (STF) auf der Grundlage wenigstens der detektierten Abtastfolgen (SS) aufweist;
- Berechnen, für jede detektierte Abtastfolge (SS), der wenigstens zwei statistischen Merkmale (STF), um die Position eines tatsächlichen Zustands (AC) innerhalb der Anomaliematrix (AM) zu definieren;
- Bestimmen, auf der Grundlage der Position des tatsächlichen Zustands (AC) in der Anomaliematrix (AM) und des mehrdimensionalen Toleranzhorizonts (TH), des Bevorstehens der notwendigen Wartung;
wobei die Motorisierungsmetrik (MM) der Geschwindigkeitsfehler eines Elektromotors, insbesondere detektiert durch einen jeweiligen Antrieb, ist.

2. Verfahren nach Anspruch 1, wobei, während des Aufzeichnens, jede Steuereinheit (3, 11) mit einer Synchronisationsfrequenz (SFC) ein Synchronisationssignal, das in die Aufzeichnung der Abtastfolgen (SS) einzubeziehen ist, empfängt; wobei das Synchronisationssignal insbesondere in allen "n" Abtastwerten (SS) einbezogen wird; wobei insbesondere die Synchronisationsfrequenz (SFC) niedriger als die Abtastfrequenz (SF), aber höher als die Übertragungsfrequenz (TF) ist.

3. Verfahren nach Anspruch 2, wobei das Synchronisationssignal die Position einer physischen oder virtuellen Master-Achse der automatischen Maschine (1) ist.

4. Verfahren nach Anspruch 2 oder 3 und umfassend den weiteren Schritt des Synchronisierens der an die Datenverarbeitungseinheit (5) übertragenen Abtastwerte (SS) unter Verwendung des Synchronisationssignals als Referenz, um zu verstehen, welcher Abtastwert einem gegebenen Zeitpunkt oder bei einer gegebenen Zeitphase der automatischen Maschine (1) entspricht.

5. Verfahren nach einem der vorhergehenden Ansprüche, wobei sich die Folge aufgezeichneter Abtastwerte (SS) auch auf eine lokale Statusmetrik (LSM), die den Zustand einer oder mehrerer an der automatischen Maschine (1) montierter Vorrichtungen betrifft, bezieht, wobei insbesondere die Werte der lokalen Statusmetrik (LSM) mittels wenigstens einer lokalen Erfassungseinheit (7), die mit einem Knoten eines bidirektionalen, digitalen und lokalen industriellen Netzes verbunden ist, detektiert werden.

6. Verfahren nach Anspruch 5, wobei die lokale Statusmetrik (LSM) Vibrationen, insbesondere solche, die in mehreren Dimensionen detektiert werden, und/oder Temperaturen und/oder Beschleunigungen umfasst.

7. Verfahren nach einem der vorhergehenden Ansprüche, wobei die Abtastfrequenz (SF) größer oder gleich 2 kHz, insbesondere größer oder gleich 4 kHz, ist.

8. Verfahren nach einem der vorhergehenden Ansprüche, wobei die Übertragungsfrequenz (TF) kleiner oder gleich 0,2 Hz, insbesondere kleiner oder gleich 0,1 Hz, ist.

9. Verfahren nach einem der vorhergehenden Ansprüche, wobei der mehrdimensionale Toleranzhorizont (TH) via einen nicht überwachten Klassifikator, insbesondere einen K-Means-Algorithmus, definiert ist; wobei der Toleranzhorizont (TH) konfiguriert ist, eine nichtlineare Form, insbesondere elliptische oder kreisförmige, aufzuweisen; wobei der Toleranzhorizont (TH) insbesondere periodisch aktualisiert wird, einschließlich der Werte der jüngsten detektierten Abtastfolge (SS).

10. Verfahren nach einem der vorhergehenden Ansprüche und umfassend den weiteren Schritt des Trainierens eines Modells der automatischen Maschine (1) mittels eines nicht überwachten Klassifikators, insbesondere eines K-Means-Algorithmus, unter Verwendung mehrerer statistischer Merkmale (STF), die sich aus bekannten Störungen ergeben, als Eingabe; insbesondere, wobei das Modell, einschließlich der jüngsten detektierten Abtastfolge (SS), periodisch aktualisiert wird; insbesondere, wobei das Modell auch im Fall einer unerwarteten Störung, die einen Bereich (AC) der Störung in der Anomaliematrix (AM) definiert, aktualisiert wird.

11. Verfahren nach einem der vorhergehenden Ansprüche, und umfassend den weiteren Schritt des Berechnens der Geschwindigkeit, mit der sich aufeinanderfolgende tatsächliche Zustände (AC) in der Anomaliematrix (AM) bewegen, insbesondere der Geschwindigkeit, mit der sich der jüngste tatsächliche Zustand (AC) auf den Toleranzhorizont (TH) zu bewegt.

12. Verfahren nach einem der vorhergehenden Ansprüche, und umfassend den weiteren Schritt des periodischen Planens eines Wartungsprogramms (9) auf der Grundlage der Position oder Geschwindigkeit des jüngsten tatsächlichen Zustands (AC) in der Anomaliematrix (AM).

13. Verfahren nach Anspruch 12 und umfassend den weiteren Schritt des periodischen Übertragens des aktualisierten Wartungsprogramms (9) an eine Wartungsressource.

14. Verfahren nach einem der vorhergehenden Ansprüche, wobei die Anomaliematrix (AM) mehrere Gruppen umfasst, von denen jede dem Status eines anderen mechanischen Elements der automatischen Maschine (1) oder mechanischer Elemente mit ähnlichen Strukturmerkmalen entspricht; insbesondere, wobei für jede Gruppe ein mehrdimensionaler Toleranzhorizont (TH) definiert wird.

15. Verfahren nach einem der vorhergehenden Ansprüche, wobei die Motorisierungsmetrik (MM) Drehmoment/Strom, der durch einen Motor und/oder Motorfolgefehler und/oder Lastprozentsatz und/oder RMS-Werte bereitgestellt wird, umfasst.

16. Automatische Maschine (1) für Herstellung oder Verpackung von Verbraucherartikeln; wobei die automatische Maschine (1) umfasst:
- einen oder mehrere Elektroantriebe (3), die konfiguriert sind, wenigstens einen elektrischen Aktuator (4) zu steuern und eine Abtastfolge (SS), mit einer Abtastfrequenz (SF), die sich auf wenigstens eine Motorisierungsmetrik (MM) des wenigstens einen elektrischen Aktuators (4) bezieht, periodisch zu detektieren und aufzuzeichnen;
- eine Datenverarbeitungseinheit (5), die konfiguriert ist, mit einer Übertragungsfrequenz (TF) gleich oder kleiner als die Abtastfrequenz (SF), die mit der Abtastfrequenz (SF) aufgezeichnete Abtastfolge (SS) periodisch zu empfangen;
- eine lokale Speichereinheit (6), die konfiguriert ist, eine Anomaliematrix (AM) mit wenigstens zwei statistischen Merkmalen (STF) auf der Grundlage wenigstens einer detektierten Motorisierungsmatrix (MM) zu enthalten;
wobei die automatische Maschine (1) konfiguriert ist, das Verfahren nach einem der vorhergehenden Ansprüche auszuführen.

17. Automatische Maschine (1) nach Anspruch 16 und umfassend wenigstens eine lokale Erfassungseinheit (7), die mit einem Knoten eines bidirektionalen, digitalen und lokalen industriellen Netzes verbunden ist; insbesondere, wobei die Maschine (1) auch eine Kommunikationsschnittstelle (8), die konfiguriert ist, mit der Datenverarbeitungseinheit (5) verbunden zu werden, und die ermöglicht, dass diese ein Wartungsprogramm (9) an eine Wartungsressource überträgt; wobei die wenigstens eine lokale Erfassungseinheit (7) insbesondere einen Smart-Tag und/oder einen IoT-Sensor umfasst; insbesondere, wobei die Elektroantriebe (3) bordseitig in einen Maschinensteuerschrank oder an dem jeweiligen elektrischen Aktuator (4), mit dem sie verbunden sind, angeordnet sind; insbesondere, wobei die automatische Maschine (1) mehrere lokale Erfassungseinheiten (7), wobei jede bordseitig in eine andere an der automatischen Maschine (1) montierte mechanische Gruppe angeordnet ist, umfasst.

## Revendications

1. Méthode pour la maintenance prédictive d'une machine automatique (1) pour fabriquer ou emballer des articles de consommation ; la méthode comprenant les étapes de :
- détection et enregistrement, périodiquement et à une fréquence d'échantillonnage (SF), d'au moins des séries d'échantillonnage (SS) liées au moins à une mesure de motorisation (MM) d'au moins un actionneur électrique (4), au moyen d'au moins une unité de commande locale (3, 11) respective ;
- transmission, périodiquement et à une fréquence de transmission (TF), inférieure ou égale à la fréquence d'échantillonnage (SF), des séries d'échantillonnage (SS) enregistrées à une unité de traitement de données (5) ;
- définition d'au moins un horizon de tolérance multidimensionnel (TH) dans une matrice d'anomalies (AM) présentant, comme dimensions, au moins deux caractéristiques statistiques (STF) sur la base au moins des séries d'échantillonnage (SS) détectées ;
- calcul, pour chaque série d'échantillonnage (SS) détectée, des au moins deux caractéristiques statistiques (STF) afin de définir la position d'une condition réelle (AC) dans la matrice d'anomalies (AM) ;
- détermination, sur la base de la position de la condition réelle (AC) dans la matrice d'anomalies (AM) et de l'horizon de tolérance multidimensionnel (TH), de l'imminence d'une maintenance nécessaire ;
dans laquelle la mesure de motorisation (MM) est l'erreur de vitesse d'un moteur électrique, en particulier détectée par un entraînement respectif.

2. Méthode selon la revendication 1, dans laquelle, pendant l'enregistrement, chaque unité de commande (3, 11) reçoit, à une fréquence de synchronisation (SFC), un signal de synchronisme à inclure dans l'enregistrement des séries d'échantillonnage (SS) ; en particulier, le signal de synchronisme est inclus dans tous les « n » échantillons (SS) ; en particulier, la fréquence de synchronisation (SFC) est inférieure à la fréquence d'échantillonnage (SF), mais supérieure à la fréquence de transmission (TF).

3. Méthode selon la revendication 2, dans laquelle le signal de synchronisme est la position d'un axe maître physique ou virtuel de la machine automatique (1).

4. Méthode selon la revendication 2 ou 3, et comprenant l'étape supplémentaire de synchronisation des échantillons (SS) transmis à l'unité de traitement de données (5) au moyen, comme référence, du signal de synchronisme pour comprendre quel échantillon correspond à un instant donné dans le temps ou à une phase temporelle donnée de la machine automatique (1).

5. Méthode selon l'une quelconque des revendications précédentes, dans laquelle la série d'échantillons (SS) enregistrés concerne également une mesure d'état local (LSM), concernant la condition d'un ou plusieurs dispositifs montés sur la machine automatique (1), en particulier les valeurs de mesure d'état local (LSM) sont détectées au moyen d'au moins une unité d'acquisition locale (7), connectée à un nœud d'un réseau industriel bidirectionnel, numérique et local.

6. Méthode selon la revendication 5, dans laquelle la mesure d'état local (LSM) comprend des vibrations, en particulier détectées dans plusieurs dimensions, et/ou des températures et/ou des accélérations.

7. Méthode selon l'une quelconque des revendications précédentes, dans laquelle la fréquence d'échantillonnage (SF) est supérieure à ou égale à 2 kHz, en particulier supérieure à ou égale à 4 kHz.

8. Méthode selon l'une quelconque des revendications précédentes, dans laquelle la fréquence de transmission (TF) est inférieure ou égale à 0,2 Hz, en particulier inférieure à ou égale à 0,1 Hz.

9. Méthode selon l'une quelconque des revendications précédentes, dans laquelle l'horizon de tolérance multidimensionnel (TH) est défini par le biais d'un classificateur non supervisé, en particulier un algorithme des k-moyennes ; l'horizon de tolérance (TH) étant configuré pour présenter une forme non linéaire, en particulier elliptique ou circulaire ; en particulier, l'horizon de tolérance (TH) est périodiquement mis à jour de manière à inclure les valeurs des séries d'échantillonnage (SS) les plus récentes détectées.

10. Méthode selon l'une quelconque des revendications précédentes et comprenant l'étape supplémentaire d'entraînement d'un modèle de la machine automatique (1) au moyen d'un classificateur non supervisé, en particulier un algorithme des k-moyennes, au moyen comme entrée d'une pluralité de caractéristiques statistiques (STF) résultant de dysfonctionnements connus ; en particulier, le modèle est périodiquement mis à jour de manière à inclure les séries d'échantillonnage (SS) les plus récentes détectées ; en particulier, le modèle est également mis à jour dans le cas d'un dysfonctionnement inattendu, de manière à définir une zone (AC) de dysfonctionnement sur la matrice d'anomalies (AM).

11. Méthode selon l'une quelconque des revendications précédentes, et comprenant l'étape supplémentaire de calcul de la vitesse à laquelle des conditions réelles (AC) successives se déplacent dans la matrice d'anomalies (AM), en particulier la vitesse à laquelle la condition réelle (AC) la plus récente se déplace en direction de l'horizon de tolérance (TH).

12. Méthode selon l'une quelconque des revendications précédentes, et comprenant l'étape supplémentaire de programmation périodique d'un programme de maintenance (9) sur la base de la position ou vitesse de la condition réelle (AC) la plus récente dans la matrice d'anomalies (AM).

13. Méthode selon la revendication 12 et comprenant l'étape supplémentaire de transmission périodique du programme de maintenance (9) mis à jour à une ressource de maintenance.

14. Méthode selon l'une quelconque des revendications précédentes, dans laquelle la matrice d'anomalies (AM) comprend une pluralité de groupes, dont chacun correspond à l'état d'un élément mécanique différent de la machine automatique (1) ou d'éléments mécaniques avec des caractéristiques structurales similaires ; en particulier, un horizon de tolérance multidimensionnel (TH) est défini pour chaque groupe.

15. Méthode selon l'une quelconque des revendications précédentes, dans laquelle la mesure de motorisation (MM) comprend le couple/courant amené par un moteur et/ou une erreur de poursuite de moteur et/ou un pourcentage de charge et/ou des valeurs moyenne quadratiques.

16. Machine automatique (1) pour fabriquer ou emballer des articles de consommation ; la machine automatique (1) comprenant :
- un ou plusieurs entraînements électriques (3) configurés pour commander au moins un actionneur électrique (4) et pour détecter et enregistrer périodiquement, à une fréquence d'échantillonnage (SF), une série d'échantillonnage (SS) se rapportant à au moins une mesure de motorisation (MM) de l'au moins un actionneur électrique (4) ;
- une unité de traitement de données (5), configurée pour recevoir périodiquement, à une fréquence de transmission (TF) inférieure à ou égale à la fréquence d'échantillonnage (SF), la série d'échantillonnage (SS) enregistrée à la fréquence d'échantillonnage (SF) ;
- une unité de stockage locale (6), configurée pour contenir une matrice d'anomalies (AM) présentant au moins deux caractéristiques statistiques (STF) sur la base d'au moins une mesure de motorisation (MM) détectée ;
la machine automatique (1) étant configurée pour mettre en œuvre la méthode selon les revendications précédentes.

17. Machine automatique (1) selon la revendication 16 et comprenant au moins une unité d'acquisition locale (7), connectée à un nœud d'un réseau industriel bidirectionnel, numérique et local ; en particulier, la machine (1) comprend également une interface de communication (8) configurée pour être connectée à l'unité de traitement de données (5) et permettant à celle-ci de transmettre un programme de maintenance (9) à une ressource de maintenance ; en particulier, l'au moins une unité d'acquisition locale (7) comprend une étiquette intelligente et/ou un capteur IoT ; en particulier, les entraînements électriques (3) sont agencés de manière embarquée sur une armoire de commande de machine ou sur l'actionneur électrique (4) respectif auquel ils sont connectés ; en particulier, la machine automatique (1) comprend une pluralité d'unités d'acquisition locales (7) agencées chacune de manière embarquée sur un groupe mécanique différent monté sur la machine automatique (1).
